**Europäisches Patentamt**

**European Patent Office**

**Office européen des brevets**

(11) Veröffentlichungsnummer: **0 247 293**
**A2**

(12) # EUROPÄISCHE PATENTANMELDUNG

(21) Anmeldenummer: **87102708.2**

(22) Anmeldetag: **26.02.87**

(51) Int. Cl.⁴: **G01L 9/14 , G01L 19/06**

Die Bezeichnung der Erfindung wurde geändert (Richtlinien für die Prüfung im EPA, A-III, 7.3).

(30) Priorität: **02.04.86 DE 3610946**

(43) Veröffentlichungstag der Anmeldung:
**02.12.87 Patentblatt 87/49**

(84) Benannte Vertragsstaaten:
**AT DE FR SE**

(71) Anmelder: **ROBERT BOSCH GMBH**
**Postfach 50**
**D-7000 Stuttgart 1(DE)**

(72) Erfinder: **Käs, Günter**
**Markelsheimer Strasse 70**
**D-7000 Stuttgart 40(DE)**

(54) **Druckfühler mit einem Bourdon-Rohr.**

(57) Es wird ein Druckfühler (2) vorgeschlagen. Der Druckfühler (2) enthält als Fühlelement ein Bourdon-Rohr (4) und eine von diesem gesteuerte Anzeigeeinrichtung (5). An einem freien Ende (10) des Bourdon-Rohrs (4) sind dicht verschlossene Behälter (14) befestigt, die mit schüttbarem Gut (17) teilweise gefüllt sind. Wenn das Bourdon-Rohr (4) durch Druckstöße oder durch auf sein fixiertes Ende (9) wirkende Störkräfte in Schwingungen versetzt wird, treten zwischen den Behältern (14) und den in ihnen enthaltenen Mengen des schüttbaren Guts (17) Schwingungsenergie verzehrende Reibungskräfte auf. Die Anzeigeeinrichtung (5) enthält Halleffekt-Elemente (21) und Permanentmagnete (19), die an dem Bourdon-Rohr (4) befestigt sind und von diesem relativ zu den Halleffek-Elementen (21) bewegt werden.

EP 0 247 293 A2

## Druckfühler

### Stand der Technik

Die Erfindung geht aus von einem Druckfühler nach der Gattung des Hauptanspruchs.

Durch die US-PS 2 810 800 ist ein Druckfühler bekannt, der ein zu einer Wendel gebogenes Bourdon-Rohr mit einem eingespannten Ende und einem freien beweglichen Ende hat, das auf eine Anzeigeeinrichtung wirkt. Die Anzeigeeinrichtung besteht aus relativ zueinander beweglichen elektrischen Kontakten. Nachteilig ist, daß die Kontakte verschleißen. Druckstöße, die in das Bourdon-Rohr gelangen, und Erschütterungen, die auf den Druckfühler wirken, verursachen Schwingungen des Bourdon-Rohrs und führen zu erhöhtem Kontaktverschleiß und zu Fehlanzeigen.

Bei einem durch die DE-AS 19 55 496 bekannten Druckfühler wirkt ein freies Ende eines Bourdon-Rohres über einen Draht auf ein freies Ende eines elastisch biegbaren Armes, dessen anderes Ende fixiert ist. Als kontaktlose Anzeigeeinrichtung dienen zwei Dehnungsmeßstreifen, die Bestandteil einer Brückenschaltung sind. Der eine der Dehnungsmeßstreifen wird beim elastischen Verbiegen des Armes elastisch gedehnt und der andere Dehnungsmeßstreifen wird gestaucht. Diese Anzeigevorrichtung arbeitet verschleißfrei. Die Befestigung des Drahtes am Bourdon-Rohr und am Arm ist aber technisch schwierig durchführbar und teuer. Außerdem besteht die Gefahr, daß im Betrieb, insbesondere dann, wenn das Bourdon-Rohr in Schwingungen gerät, der Draht zu Bruch geht. Auch das Bourdon-Rohr selbst kann infolge von Schwingungen beschädigt oder gar unbrauchbar werden. Es sind keine mechanischen Justiermittel vorhanden, mittels denen beispielsweise eine Nullpunkteinstellung der Anzeigeeinrichtung durchführbar ist. Infolgedessen kann eine Nullpunkteinstellung nur mittels Schleifkontakten von in die Brückenschaltung eingebauten verstellbaren Widerständen erreicht werden. Alterungsabhängige Übergangswiderstände an den Schleifkontakten können zu Meßfehlern führen.

### Vorteile der Erfindung

Der Druckfühler mit den kennzeichnenden Merkmalen des Anspruchs 1 hat den Vorteil der Dämpfung von Schwingungen, die infolge von in das Bourdon-Rohr gelangenden Druckstößen oder von auf den Druckfühler wirkenden Erschütterungen angeregt werden. Infolge der Dämpfung wird eine Beschädigung der Bauteile des Druckfühlers vermieden. Die Schwingungsdämpfung hat zusätzlich den Vorteil, daß Meßwertanzeigen kleinere Schwingungsausschläge haben und deshalb leichter und genauer auswertbar sind.

Durch die in den Unteransprüchen aufgeführten Maßnahmen sind vorteilhafte Weiterbildungen und Verbesserungen des im Hauptanspruch angegebenen Druckfühlers möglich. Bei der Anordnung von zwei oder mehr Behältern gemäß dem Merkmal des Anspruchs 2 ist eine erhöhte Betriebssicherheit auch bei Frosttemperaturen vorhanden. Bei Frosttemperaturen würde bei Verwendung nur eines Behälters, wenn Feuchtigkeit in den einzigen Behälter eingedrungen sein sollte, dessen Inhalt an den Behälter anfrieren mit der Folge, daß keine Schwinungsdämpfung zustande käme. Bei Verwendung von mehreren Behältern ist ein Totalausfall der Schwingungsdämpfung wesentlich unwahrscheinlicher, denn es müßte in alle Behälter Feuchtigkeit eindringen. Die Anordnung mehrerer Behälter hat noch den Vorteil, daß das schüttbare Gut in gleichbleibend gleichmäßigerer Weise auf mehr Wandfläche zur Erzeugung von mehr Reibungsarbeit verteilt ist. Außerdem können die Behälter mit unterschiedlich dämpfenden Gütern gefüllt werden. Die kennzeichnenden Merkmale der Ansprüche 3 bis 5 verstärken und vergleichmäßigen die Schwingungsdämpfung. Die kennzeichnenden Merkmale der Ansprüche 4 und 5 ermöglichen außerdem eine preiswerte Herstellung der Behälter. Die kennzeichnenden Merkmale des Anspruchs 6 vermeiden teuere bewegliche und deshalb störungsanfällige Koppelungsmittel zwischen dem Bourdon-Rohr und der Anzeigeeinrichtung. Die kennzeichnenden Merkmale des Anspruchs 7 ermöglichen in einfacher und billiger Weise eine Einstellung, beispielsweise eine Nullpunkteinstellung, des Druckfühlers. Die kennzeichnenden Merkmale des Anspruchs 8 haben den Vorteil einer bequemen und dauerhaften Justage.

### Zeichnung

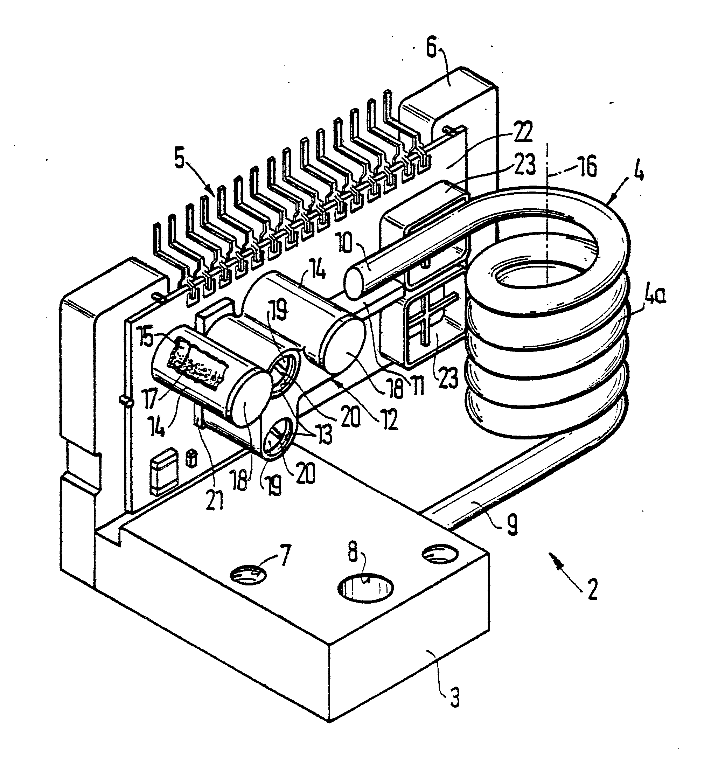

Ein Ausführungsbeispiel des Druckfühlers ist in der Zeichnung dargestellt und in der nachfolgenden Beschreibung näher erläutert.

Beschreibung des Ausführungsbeispiels

Das dargestellte Beispiel eines Druckfühlers 2 hat eine Grundplatte 3, ein Bourdon-Rohr 4, eine Anzeigeeinrichtung 5 und eine Befestigungsplatte 6 für die Anzeigeeinrichtung 5.

Die Grundplatte 3 hat Befestigungslöcher 7 und ein Druckanschlußloch 8. Ein Ende 9 des Bourdon-Rohres 4 ist in der Grundplatte 3 dicht befestigt und kommuniziert mit dem Druckanschlußloch 8. Ein freies Ende 10 des Bourdon-Rohres 4 ist mit einem Befestigungsflansch 1 verbunden. Das freie Ende 10 ist beispielsweise durch Schweißen verschlossen. Ebenfalls durch Schweißen kann beispielsweise der Befestigungsflansch 11 an dem Ende 10 befestigt sein. Der Befestigungsflansch 11 trägt ein Bauteil 12, das beispielsweise zwei Gewindelöcher 13 und zwei Behälter 14 in sich vereinigt.

Die Behälter 14 sind im wesentlichen zylindrisch gestaltet und haben jeweils an einem Ende einen Boden 15. Die Längsachsen der Behälter 14 kreuzen eine Wickelachse 16 des Bourdon-Rohres 4 im wesentlichen recktwinkelig und in unterschiedlichen Abständen. Die Behälter 14 sind mit einem als Dämpfungsmittel dienenden schüttbaren Gut 17 teilweise gefüllt. Als schüttbares Gut kann beispielsweise Quarzsand verwendet werden. Beispielsweise kann das Schüttgut auch aus Metallspänen oder Metallkugeln bestehen. Die Behälter 14 sind mittels Deckeln 18 luft-und feuchtigkeitsdicht verschlossen. Die beiden Behälter 14 können mit unterschiedlichen Mengen und/oder unterschiedlichen Arten von schüttbarem Gut 17 gefüllt sein. Beispielsweise ist es auch möglich, die Behälter 14 unterschiedlich lang auszubilden.

Im wesentlichen parallel zu den Behältern 14 sind die Gewindelöcher 13 angeordnet. Diese Gewindelöcher 13 nehmen im wesentlichen stabförmige Permanentmagnete 19 auf. Diese Permanentmagnete haben außen je ein Gewinde, das in das jeweils zugeordnete Gewindeloch 13 paßt und dort selbstsichernd reibt. Zum Hineindrehen und Justieren der Permanentmagnete 19 besitzen diese Schraubenschlitze 20. In der Verlängerung des Permanentmagneten 19 sind Halleffekt-Elemente 21 angeordnet. Die Halleffekt-Elemente sind beispielsweise auf einer gedruckten Schaltung 23 befestigt, die ihrerseits an der Befestigungsplatte 6 befestigt ist. Die Befestigungsplatte 6 wiederum ist mit der Grundplatte 3 vereinigt, so daß das fixierte Ende 9 des Bourdon-Rohres 4 eine gleichbleibende Ausrichtung zu den Halleffekt-Elementen 21 hat. Die gedruckte Schaltung 22 enthält nicht dargestelle Signalauswerteelemente wie Operationsverstärker und beispielsweise zwei von diesem gesteuerte Schaltverstärker 23.

Wenn durch das Druckanschlußloch 8 hindurch Druck in das Bourdon-Rohr 4 geführt wird, so werden dessen Windungen 4a elastisch federnd aufgeweitet mit der Folge, daß sich das freie Ende 10 des Bourdon-Rohres 4 der gedruckten Schaltung 22 nähert. Dies hat zur Folge, daß zwischen den Permanentmagneten 19 und den Halleffekt-Elementen 21 vorhandene Abstände kleiner werden. Die Verkleinerung dieser Abstände verursacht Spannungsänderungen an nicht dargestellten Ausgängen der Halleffekt-Elemente 21. Diese Spannungsänderungen werden von der gedruckten Schaltung 22 ausgewertet und bewirken beispielsweise, wenn bestimmte Schwellwerte über-oder unterschritten werden, das Aktivieren der Schaltverstärker 23. Eines der Halleffekt-Elemente 21 ist beispielsweise dazu bestimmt, über einen der Schaltverstärker 23 eine Pumpe einzuschalten. Das andere Halleffekt-Element 21 ist beispielsweise dazu bestimmt, die erwähnte Pumpe wieder auszuschalten, wenn diese einen nicht dargestellten Speicher auf einen gewünschten Druck aufgeladen hat. Infolge der Anordnung der Gewindelöcher 13 und der diesen angepaßten Ausbildung der Permanentmagnete 13 und des Anordnens der Schraubenschlitze 20 an diesen Permanentmagneten 19 lassen sich die Drücke, die das Aktivieren der Schaltverstärker 23 bewirken, bequem einstellen. Die Einstellungen bleiben erhalten, weil die Permanentmagnete 19 in der bereits erwähnten Weise selbstsichernd in den Gewindelöchern 13 angeordnet sind.

Es ist unvermeidlich, daß Druckstöße in das Bourdon-Rohr 4 gelangen, und/oder daß von außen Erschütterungen auf den Druckfühler 2 wirken. Dies hat zur Folge, daß das freie Ende 10 des Bourdon-Rohres und auch das Bauteil 12 Schwingungen ausführen, die Abstandsänderungen zwischen den Permanentmagneten 19 und den Halleffekt-Elementen 21 bewirken. Entsprechend den Schwingungen werden die Behälter 14 hin-und herbeschleunigt. Das jeweils in den Behältern 14 befindliche schüttbare Gut 17 bildet eine träge verformbare Masse, die zwischen den Endlagen der Schwingbewegungsbahn ihre Form ändert. Die hierzu notwendige Gestaltänderungsenergie, die aufgrund von Reibung zwischen den Partikeln des Schüttguts 17 und durch die Reibungsverlustenergie zwischen der Behälterwand 14 und dem Schüttgut 17 entsteht, wird der kinetischen Energie der schwingenden Massen entzogen. Infolge der unterschiedlichen Entfernungen der Behälter 14 von der Wickelachse 16 des Bourdon-Rohres 14 werden bei gleich langen Behältern die jeweils eingeschlossenen Mengen des schüttbaren Guts 17 unterschiedlich schwappen und deshalb auch unterschiedliche Dämpfungskräf te verursachen. Dadurch werden mit gegebenenfalls unterschiedlichen Frequenzen angeregte Schwingungen besonders wirksam gedämpft. Wie bereits angedeutet, können die Behälter 14 auch unterschiedlich lang ausgebildet werden oder mit unterschiedlichen Mengen des schüttbaren Guts 17 gefüllt sein.

Durch Anbringung der als eine Dämpfungseinrichtung wirkenden Behälter 14 wird insbesondere ein Anfachen von Schwingungen des Bourdon-Rohres im Bereich von dessen Eigenschwingungszahl wirksam unterdrückt. Die erreichte Dämpfung der Schwingungen bewirkt weniger große Spannungsausschläge an den Ausgängen der Halleffekt-Elemente 21, so daß diesen einfachere und billigere Siebmittel nachgeordnet werden können. Die erreichte Dämpfung vermeidet auch plastische Verformungen des Bourdon-Rohres 4 oder Dauerbrüche infolge von zu starker Rohrbiegewechselbeanspruchung. Der Druckfühler 2 ist deshalb auch besonders gut zur Verwendung in Kraftfahrzeugen geeignet, wo normalerweise Erschütterungen infolge von Vibrationen eines Antriebsmotors und des Fahrwerks sehr störend wirken. Der beschriebene Druckfühler 2 kann beispielsweise Bestandteil einer Bremsanlage eines Kraftfahrzeugs sein. Dabei spielt es an sich keine Rolle, ob der Druckfühler 2 das Laden von Fremdenergiespeichern der Bremsanlage steuert oder zum Einregulieren von Bremsdrücken auf vom Fahrer wählbare Bremsdrücke verwendet wird. Ergänzend wird noch darauf hingewiesen, daß die Mehrfachanordnung von Behältern 14 samt deren Füllmengen den Vorteil hat, daß durch zufällige Undichtheiten eines Behälters und Eindringen von Feuchtigkeit kein Totalausfall der Dämpfung bei Frosttemperatur auftreten kann.

**Ansprüche**

1. Druckfühler mit einem Bourdon-Rohr, dessen eines Ende ortsfest angeordnet und dessen freies Ende beweglich ist, und mit einer kontaktlos arbeitenden Anzeigeeinrichtung, die mit dem freien Ende des Bourdon-Rohres gekoppelt ist, dadurch gekennzeichnet, daß an dem freien Ende (10) des Bourdon-Rohres (4) ein dicht verschlossener Behälter (14) befestigt ist und daß der Behälter (14) mit einem aus einem schüttbaren Gut (17) bestehenden Dämpfungsmittel teilweise gefüllt ist.

2. Druckfühler nach Anspruch 1, dadurch gekennzeichnet, daß wenigstens ein zusätzlicher Behälter (14) mit schüttbarem Gut (17) dem freien Ende (10) des Bourdon-Rohres (4) zugeordnet ist.

3. Druckfühler nach Anspruch 2, dadurch gekennzeichnet, daß die Behälter (14) in ihren Bewegungsrichtungen unterschiedlich lang sind.

4. Druckfühler nach Anspruch 2 oder 3, dadurch gekennzeichnet, daß die Behälter (14) mit unterschiedlichen Mengen des schüttbaren Guts (17) gefüllt sind.

5. Drückfühler nach einem der Ansprüche 2 bis 4, dadurch gekennzeichnet, daß die Behälter (14) mit unterschiedlichen Arten von schüttbarem Gut (17) gefüllt sind.

6. Druckfühler nach einem der Ansprüche 1 bis 5, dadurch gekennzeichnet, daß die Anzeigeeinrichtung (5) aus wenigstens einem ortsfest angeordneten Halleffekt-Element (21) und einem mit dem freien Ende (10) des Bourdon-Rohres (4) verbundenen Permanentmagnet (19) besteht.

7. Druckfühler nach Anspruch 6, dadurch gekennzeichnet, daß der wenigstens eine Permanentmagnet (19) mittels eines Gewindes (13) relativ zum Halleffekt-Element (21) verstellbar angeordnet ist.

8. Druckfühler nach Anspruch 7, dadurch gekennzeichnet, daß der Permanentmagnet (19) mittels eines selbstsichernden Gewindes (13) befestigt ist.